# EUROPEAN PATENT APPLICATION

(11) **EP 2 471 370 A1**
(43) Date of publication of application: **04.07.2012**
(21) Application number: 10197179.4
(22) Date of filing: 28.12.2010
(51) Int. Cl.: A21B 1/00, A21D 8/06

(54) **Method and apparatus for baking bread**

(71) Applicant: Bakkersland IP B.V., 5321 JV Hedel (NL); FRI-JADO B.V., 4878 AA Etten-Leur (NL)
(72) Inventor: Sluimer, Pieter, 6871 XB, Renkum (NL); Molenaar, Jaap, 3311 DK, Dordrecht (NL)
(74) Representative: Prins, Hendrik Willem

(57) **Abstract**

The present invention relates to a method for baking bread, comprising the steps of:
i. preparing a dough;
ii. fermenting the dough;
iii. optionally proofing the dough; and
iv. subjecting the fermented, optionally proofed dough under baking conditions to a reduced pressure, such that the proofing step is shortened or avoided.

## Description

The present invention relates to a method and apparatus for making baked bread. In particular, a bread making method that provides the same quality of bread but at a shortened bread making time period.

The bread making process comprises several steps.

The dough preparation step comprises the scaling (or metering) of ingredients and mixing the ingredients while forming a dough. The object of the dough preparation is to obtain a dough in which the wheat proteins form a coherent network, the so called gluten. This can be done in one step and takes in that case 5-30 minutes, generally 10 minutes. Another method is an initial mixing of a part of the ingredients, then introducing a resting time, followed by mixing in the rest of the ingredients. In that case the dough preparation might take more than one hour, such as 70 to 90min.

The next step is the fermentation process. The fermentation process starts during or at the end of mixing and the moulding or shaping of the dough. The aim of the fermentation process is to further develop the dough. The fermentation process may comprise various types of fermentation, like bulk fermentation and fermentation of the dough pieces such as obtained by manipulations of the dough, like knock back, dividing the dough into pieces for one loaf and rounding. The total fermentation process usually varies between 10 and 120 minutes, generally 60 minutes.

The further step is the proofing of the fermented dough. Proofing covers the time period between fermentation of the dough and baking. However, proofing may start already after moulding or shaping of the dough. The aim of the proofing is to increase the volume of the dough, in order to obtain during baking the desired bread or loaf volume. During or at the end of the proofing incisions can be made on the dough surface or the dough pieces might be decorated with seeds. Generally, proofing times varies between 40 and 100 minutes, generally 80 minutes. It is in essence a shortening or avoidance of the proofing that the present invention has achieved. Under circumstances and/or dependent on the type of bread it may be that preproofing takes place during the fermentation step or in between the fermentation step and the moulding of the dough. Such preproofing lasts generally between 5 and 20min.

The sebsequent step is baking. Baking covers the time period between in- and out ovening. During baking gelatinization of starch and heat setting of proteins take place, a dry crust is formed and, above all, the final volume is set. Baking times varies between 10 and 60 minutes, generally 30 minutes.

Finally the baked bread is cooled. Cooling covers the time period between the end of baking and packaging or slicing. During cooling moisture evaporates from the interior of the baked bread. A second mechanism of cooling is contact with ambient air. Cooling time varies between 30 and 80 minutes, generally 60 minutes.

The total processing time of an average bread making process will be 240 minutes or 4 hours

The present invention has for its object to improve the bread making process in that the time for making the baked bread is shortened. But such shortening of the bread preparation is such that it has no or substantially no impact on the quality of the baked bread in relation to taste, tenderness, strength, crust and storage properties.

This object is met by the present invention with a method for baking bread, comprising the steps of:
i. preparing a dough;
ii. fermenting the dough;
iii. optionally proofing the dough; and
iv. subjecting the fermented optionally proofed dough under backing conditions to a reduced pressure, such that the proofing step is shortened or avoided.

Due to the use of a reduction pressure in the baking oven, the time period required for the proofing can be shortened or even abandoned. Thus, a dough after the moulding may be subjected to a preproofing (after mixing the dough subjected to a fermentation process before moulding) or directly placed in the baking oven which is at baking temperature. According to the invention part or the entire proofing takes place in the oven which is at baking temperature and at a subatmospheric or reduced pressure. Due to the reduced pressure at the beginning of the baking process the bread is subjected to an accelerated and shorter proofing. The pressure reduction and the period of pressure reduction are selected such that the bread will obtain after the baking process the same qualitative and quantitative properties as bread that would have been subjected to a tradition proofing and baking under atmospheric pressure.

As a rule of thumb, the shorter (or absence of) the proofing the longer and greater the pressure reduction during the baking process should be. But the pressure reduction may not be such that the dough will be expanded too much and no coherent baked bread be formed. This means that the pressure should not be reduced to less than 0.1bar and preferably not less than 0.2bar. On the other hand, the greater the pressure reduction than the shorter the required period ofproofing. Finally, it is to be born in mind that the deeper the pressure reduction the more stringent measures have to be taken in relation to the design, the vacuum means and safety of the baking oven. Generally, the proofing time period is less than 40min, and preferably in the range of 0min to 30min.

Under the above mentioned requirements and conditions it is generally acceptable when the pressure reduction comprises lowering the pressure to about 0.9 to about 0.2bar. Good results have been obtained at pressure reductions of about 0.8 to about 0.3bar. Practically is a pressure reduction of about 0.5bar.

After the dough has been placed in the baking oven which is at baking temperature, the pressure is to be reduced. The rate at which the pressure is reduced depends inter alia on the type and consistency of bread dough and on the residing baking temperature. A pressure reduction at a high rate may result in a rupture or explosion of the dough structure and form. A too slow decrease in pressure may result in an insufficient proofing because the bread structure becomes baked and lost its elasticity and ability to yield and arrive at a larger and more voluminous bread form. Accordingly, it has proven by laboratory experiments that the pressure is reduced at a rate of about 0.01 to about 0.2bar/s is generally acceptable. Under preferred circumstances it turned out suitable to allow a pressure reduction at a rate of about 0.05 to about 0.1bar/s. Thereby acquiring the benefits of the invention under optimal circumstances.

After having reached the intended pressure reduction, the period of pressure reduction has been practically been adjusted to about 1-10minutes. Such period may be longer or shorter depended on the type of bread dough and any preproofing. Preferably a period of about 2 to about 8minutes appeared generally sufficient. However, for special types of dense of low fermented dough types it is possible that the period of pressure reduction lasts up to 20min, preferably less than 10min.

The pressure reduction may be constant during the period of pressure reduction or may vary. When kept substantially constant this requires a frequent or continuous reduction of pressure because the dough will release water vapor that will increase the pressure. During the evaporation of water from the internal of the dough core the core temperature will be the boiling temperature at the residing (subatmospheric) pressure. Thus, according a preferred option the pressure is kept at the reduced pressure but at a pressure that gelatinization of the starch and heat setting of the proteins can take place. However, it is very practical and does not require sophisticated technology for maintaining the pressure at a certain reduced pressure, if preferably the pressure is allowed to increase gradually. This only requires an initial pressure reduction where after the pressure increases as a result of release of evaporated water from the dough. The pressure raise should be controlled in order to avoid that the expanded and porous bread structure will collapse because the pressure was raised to quickly. Generally, it is sufficient if the pressure increases over a time period of about 5 to about 15min, and preferably over a time period of about 7 to about 10min.

For the formation of a crust which is desired that the crust is not dehydrated resulting in a strong and hard crust that lost its desired tenderness. In order to avoid dehydration and provide a good and tasteful crust it is preferred that steam is added during the period of reduced pressure. The steam will condensate on the bread crust and will keep the crust softer for a longer time during baking.

After the baking of the bread at a temperature of about 190°C to about 260°C (depended on the type of bread), the baked bread will be hot and will have a temperature close to the baking temperature. Thus, it requires time for cooling the baked bread before it can be handled manually without precautions. However, the bread may be cooled at the end of the baking process by subjecting the bread to vacuum cooling. Vacuum cooling will lower the temperature of the bread relatively fast although the quality of the bread is not substantially affected.

The method of the invention for baking bread is such that the traditional processing time period may be reduced by 10 to 50%, such as 20 to 40% by shortening or even avoiding the proofing. The reduction may be even larger if use is made of vacuum cooling. Thus the processing time may be about 60 to about 120min, and is preferably about 80 to about 100min. Still the baked bread is of traditional quality.

Another aspect of the invention relates to an oven, designed and arranged such as to carry out the method of baking bread under reduced pressure.

Mentioned and other features and advantages of the method and oven of the invention will become apparent from the following description of several embodiments. These embodiments are given for illustrative purposes and are not intended to limit the invention thereto.

The dough and bread that can be made with the method according to the invention has a traditional and standard composition and quality, although new types of bread may be made in a similar manner.

The basic ingredients are wheat flour, water, yeast, salt and optional ingredients. Wheat flour includes white flour, whole meal. Additionally or in the alternative can be used broken wheat, rye flour, meal and flour of other cereals. Water is important as it controls the consistency and fluidity of the dough. Water is also important in the heat transfer during baking, and in the gelitinzation of the starch. Yeast is present for the leavening or fermentation, and imparts taste to the end product. Salt is also added as a tasting agent. Optional ingredients (if added), such as fat, emulsifiers, enzymes (amylases, and hemicellulases), sugars,milk products, oxidants, and bread improvers, provide the bread with certain properties, such as for toast bread, hamburger buns, brioche, raisin bread and compensate for seasonal and regional variations of the ingredients such as wheat.

The ingredients are intensively mixed for providing a homogeneous mixture. Mixing is also relevant for the gluten development. The gluten development relates to the moistening and swelling of protein particles. The protein particles are contacted by the mixing forces and may entangle forming a structure. The result is a socalled gluten structure or complex that imparts to the the dough (and baked bread) the viscoelastic properties. The final dough should have a good viscosity, elasticity, plasticity, moderate sticky and relaxation.

After the mixing of the ingredients and the formation of the dough, fermentation takes place. Fermentation results in gas formation and in a volume increase. The fermentation is, apart from the start, an anaerobic fermentation and products are ethanol and carbon dioxide. The gas is collected in gas cells that are relatively stable. After a period of fermentation the dough is treated by knocking back, scaling and rounding of the dough pieces. This treatment results in a strengthening of the gluten structure. In addition, gas is expelled from the gas cells and the gas cells are redistributed.

The speed of fermentation is dependent on the carbon dioxide production. Most gas is produced during the fermentation and knocking or punching. During the subsequent intermediate proof and final proof additional gas is produced. Fermentation is an exothermic process sothat the dough will increase in temperature for a degree Celsius. During baking the condensation of water vapor will heat the dough.

After fermentation the optional proofing of the dough takes places. But the objective of the present invention is to shorten the proofing as much as possible.Baking is carried out at about 160°C to 270°C, and generally at 220°C to 260°C. Baking is used in order to solidify the vicous structure. Heat is transferred by radiation to the dough using heating elements and the warm oven walls. Heat is also transferred by convection using a forced ventilation. Finally, heat is transferred to the dough and into the dough by conduction.Baking results in the formation of the crumb and the formation of the crust. The crumb is formed as a result of gelatinazation (above 60°C) of the starch and the heat induced setting of the gluten. The crust gets its brownish color by the socalled Maillard reaction.

In the following examples white bread, brown bread, whole grain bread, raisin bread and crispy small bread will be made with the method according to the invention.

### Example 1: white bread

Bread flour (100parts), press yeast (3 parts), salt (1.8 parts), bread improver (3parts) and water (60parts) were mixed for 10min. The dough temperature was 26°C. The dough was scaledand rounded (dough weight 940g) and subjected to a fermentation process at 30°C, and 80% RH for 40min. The dough was formed into elongated and round dough pieces and subjected to a proofing for 30min. After making incisions in the dough piece the dough pieces were placed in an oven having a baking temperature of 230°C. The pressure was reduced to 0.5bar in 3min. The pressure was allowed to equalize. Baking time 25min. The white bread produced was of excellent quality.

When avoiding the proofing the pressure was reduced to 0.3bar and maintained at this pressure for 10min. After baking the bread was cooled by vacuum cooling by reducing the pressure for evaporating moisture and cooling the baked bread. Still the baked bread obtained was of excellent quality.

### Example 2: brown bread

bread flour for making brown bread (100parts), press yeast (3parts), salt (1.8parts), bread improver (3parts) and water (65parts) were mixed, and kneaded for 10min. The dough temperature was 26°C. The dough was scaled and rounded (dough weight 970g) and subjected to a fermentation process at 30°C, and 80% RH for 40min. The dough was formed into elongated and round dough pieces and subjected to a proofing for 30min. After making incisions in the dough piece the dough pieces were placed in an oven having a baking temperature of 230°C. The pressure was reduced to 0.5bar in 3min. The pressure was allowed to equalize. Baking time 30min. The brown bread produced was of excellent quality.

The proofing time could be shortened with a concomittant use of a lower pressure of about 0.4bar for about 7min. Still the brown bread was of excellent quality.

### Example 3: whole grain bread

Whole grain bread flour (100parts), press yeast (3parts), salt (1.8parts), bread improver (3parts) and water (70parts) were mixed for 12min. The dough temperature was 25°C. The dough was scaled and rounded and subjected to a first proofing at 30°C, and 80% RH for 30min. The dough was formed into elongated and round dough pieces (dough weight 1000g) and subjected to a second proofing for 30min. After cutting the dough was placed in an oven having a baking temperature of 230°C. The pressure was reduced to 0.5bar in 3min. The pressure was allowed to equalize. Baking time 40min. The whole meal bread produced was of excellent quality.

When keeping the pressure at 0.5bar for 5min to 12min the same bread quality was obtained but with a shorter or no proofing.

### Example 4: raisin bread

Bread flour (100parts), press yeast (5parts), salt (1.8parts), bread improver for fruit bread (20parts), water (55parts), and filler (70parts) were mixed, and kneaded for 10min. The dough temperature was 25°C. The dough was scaled and rounded (dough weight 1800g) and subjected to a ferrmentation process at 30°C, and 80% RH for 40min. The dough was formed into round dough pieces of 60 g and the surfa 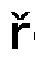 e was brushed with egg liquid. The dough pieces were subjected to a proofing for 30min. The dough was placed in an oven having a baking temperature of 260°C. The pressure was reduced to 0.5bar in 2min. The pressure was allowed to equalize. Baking time 10min. The raisin bread produced was of excellent quality.

The same result was obtained when the bread was after baking subjected to vacuum cooling.

### Example 5: crispy small bread

bread flour of good baking quality (100parts), press yeast (4parts), salt (1.8parts), bread improver for crusty bread(3parts) and water (55parts) were mixed, and kneaded for 10min. The dough temperature was 25°C. The dough was scaled and rounded (dough weight 1800g) and subjected to a fermentation process at 30°C, and 80% RH for 40min. The dough was formed into elongated and round dough pieces (60g) and subjected to a final proof for 30min. After making incisions in the dough pieces the dough was placed in an oven having a baking temperature of 220°C. The pressure was reduced to 0.6bar in 2min. The pressure was allowed to equalize. Baking time 18min. The small bread produced was of excellent quality.

## Claims

1. Method for baking bread, comprising the steps of:
i. preparing a dough;
ii. fermenting the dough;
iii. optionally proofing the dough; and
iv. subjecting the fermented, optionally proofed dough under baking conditions to a reduced pressure, such that the proofing step is shortened or avoided.

2. The method as claimed in claim 1, wherein the proofing time period is less than 40min, such as 0min to 30min.

3. The method according to claim 1 or 2, wherein the pressure reduction comprises lowering the pressure to 0.9 to 0.2bar, preferably to 0.8 to 0.3bar, such as 0.5bar.

4. The method according to any of the claims 1-3, wherein the pressure is reduced at a rate of 0.01 to 0.2bar/s, preferably 0.05 to 0.1bar/s.

5. The method according to any of the claims 1-4, wherein the pressure reduction lasts for 1-10minutes, preferably 2-8minutes.

6. The method according to any of the claims 1-5, wherein the pressure is kept at the reduced pressure.

7. The method as claimed in any of the claims 1-6, wherein the pressure is allowed to increase gradually.

8. The method according to claim 7, wherein the pressure increases over a time period of 5-15min, preferably 7-10min.

9. The method according to any of the claims 1-8, wherein steam is added during the period of reduced pressure.

10. The method according to any of the claims 1-9, wherein the baked bread is subjected to vacuum cooling.

11. The method according to any of the claims 1-11, wherein the bread making time is about 60 to 120min, preferably 80-100min.

12. Oven, designed and arranged such as to carry out the method of baking bread under reduced pressure according to any of the claims 1-11.
